# EUROPEAN PATENT APPLICATION

(11) **EP 2 853 796 A1**
(43) Date of publication of application: **01.04.2015**
(21) Application number: 14184690.7
(22) Date of filing: 12.09.2014
(51) Int. Cl.: F16L 13/14, B21D 39/02, B21D 39/04, F16L 13/16

(54) **Method for connecting pipes of refrigerating circuits, particularly domestic refrigerators, and system for obtaining this connection**

(30) Priority: 26.09.2013 IT VA20130055
(71) Applicant: Whirlpool Corporation, Benton Harbor, MI 49022 (US)
(72) Inventor: Zoia, Alfonso, 21025 Comerio (IT); Riva, Giuliano, 21025 Comerio (IT)
(74) Representative: Guerci, Alessandro

(57) **Abstract**

A method for connecting pipes 12, 14, particularly for connecting pipes used in a refrigerating circuit of a refrigerator or suchlike, comprises the phases of inserting the end of a first pipe 12 into the end of a second pipe 14 so that the outer surface of the first pipe 12 is substantially in contact with the inner surface of the second pipe 14, and plastically deforming the connection area so as to create at least one annular groove 16 round the second pipe 14, said plastic deformation locally affecting both pipes 12, 14.

## Description

This invention relates to a method and a system for connecting pipes, particularly for connecting pipes used in refrigerating circuits of refrigerators, air-conditioning systems, heat pumps and suchlike.

Currently the connection of said pipes when creating and/or repairing these circuits envisages welding or making use of "Lokring" type rings and relative tools.

In the first case, the connection method requires highly specialised manpower in order to avoid any leaks in the case of welding not executed in accordance with good practice. Another disadvantage of this method lies in the need to make use of a naked flame, not always compatible either with the environment in which the refrigeration circuit is located or with the materials adjacent to the connection area.

In the second case, in addition to a careful preparation of the ends of the pipes, the use of a central connector and rings that slide over it makes the cost of this method quite high. Furthermore, if the ends of the pipes are not sufficiently prepared and have longitudinal grooves, the hydraulic seal of the connection is not ensured.

The aim of the present invention is therefore to provide a method and system for connecting the ends of pipes together that does not have the above-mentioned drawbacks and is simple and cheap to produce.

According to the invention, this aim is achieved thanks to the characteristics listed in the accompanying claims.

The main advantages of the method according to the present invention are the absence of naked flames to create the connection and the lack of necessity to use special rings to add to the pipes in their connection area. In fact, the creation of one or preferably two or more annular grooves on the surface of the outer pipe, which also causes plastic deformation of the inner pipe inserted in the outer pipe, guarantees both a high-resistance mechanical fixing between the two pipes and a perfect seal even in the presence of small imperfections in the ends of the pipes to be connected.

In order to increase the seal of the connection, before connecting the pipes sealant is applied, such as an epoxy resin or an anaerobic polymerisation adhesive.

Further advantages and characteristics of the present invention will emerge from the following detailed description, given purely by way of a non-limiting example, with reference to the accompany drawings in which:
- Figure 1 is a partially cutaway longitudinal view of the area of connection between two pipes of a refrigerating circuit of a refrigerator;
- Figure 2 is a photograph of the connection shown in Figure 1;
- Figures 3 and 4 are side views of a manual tool for creating the connection shown in Figure 1, in two configurations of insertion in the connection area and creation of the said connection;
- Figure 5 is a view along Arrow V in Figure 4; and
- Figure 6 is a partially cutaway longitudinal view of a shaped wheel used in an automatic tool for creating the connection in Figure 1.

With reference to the drawings, 10 indicates as a whole a connection area of an inner pipe 12 to an outer pipe 14 of a circuit of a refrigerator in which a refrigerating fluid is designed to circulate. The inner pipe 12 has a smaller outer diameter than the outer diameter of the outer pipe 14 and is slid into the latter since the outer diameter of the inner pipe 12 is substantially identical to the inner diameter of the outer pipe 14.

The pipes 12, 14 can be of any material and not necessarily identical for the inner and outer pipe. Copper and aluminium can be used, but also other metals can advantageously be used in the method according to the invention (stainless steel, titanium, etc.).

As regards the outer diameter of the pipes, it can fluctuate across a wide range, although the applications tested by the applicant envisage a diameter of between 2 and 10mm, preferably between 4 and 8mm. As regards the thickness of the pipes, it can vary between 0.2 and 2mm, preferably between 0.4 and 0.8mm.

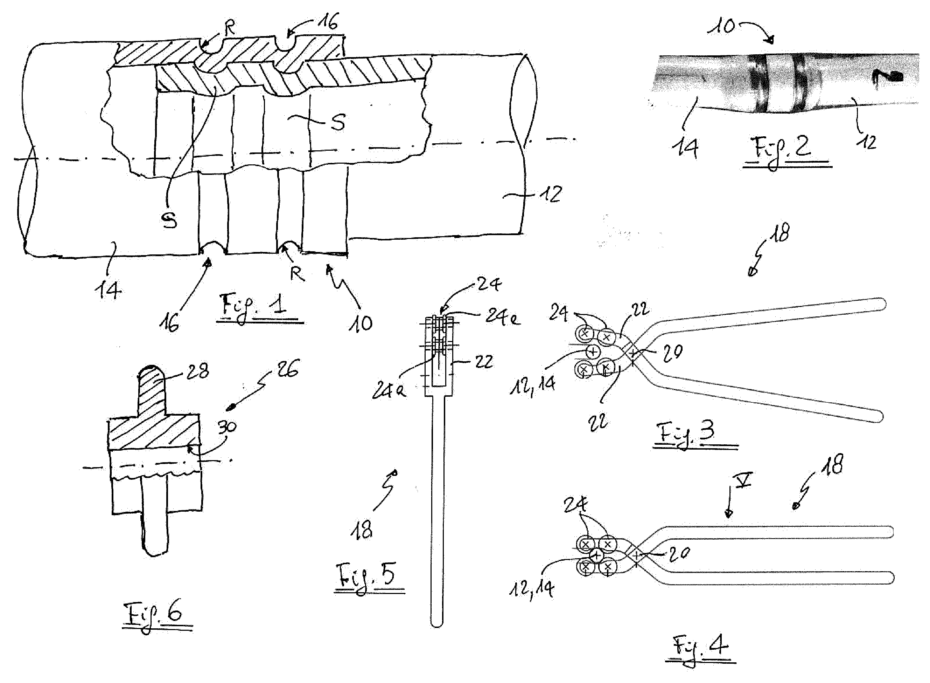

According to the method of the invention, after the inner pipe 12 has been inserted into the outer pipe 14 for a length preferably exceeding at least 20mm, a mechanical tool is used in order plastically to deform the two pipes 12 and 14 creating one or more annular grooves 16, preferably two grooves. The plastic deformation in the area of the grooves 16, that have a radius of curvature R of between 0.5 and 2mm, preferably between 0.8 and 1.2mm, also affects the part of inner pipe 12, as shown by area S in Figure 1.

Figures 3-5 show a manual device for creating the annular grooves 16. It envisages a tool 18 in the form of pliers with a fulcrum 20 and two opposing arms 22, each having a pair of rotating shaped rollers 24 each with two annular projections 24a capable of forming the annular grooves 16 after the tool 18 passes from the open configuration in Figure 3 to the manually tightened configuration in Figure 4 in which the rollers 24 are pressed and made to rotate round the outer pipe 14.

Figure 6 shows a roller or shaped wheel 26 suitable for fitting onto an automatic tool (not shown) capable of pressing each roller 26 at a predetermined area of the connection 16 in order to form the respective annular groove 16. The roller 26 has a disc portion 28 with a diameter of 18mm, a thickness of 2mm and a rounded extreme edge with a radius of curvature of 1 mm. The roller 26 has a central hole 30 in order to fit onto an automatic tool, for example equipped with arms operated by hydraulic actuators.

The results deriving from the connection method according to the invention are surprising both in terms of hydraulic seal and in terms of the tensile strength of the connection. As regards the latter property, in a connection of two pipes having the same outer diameter and thickness (with socketing) and made of Alu/Alu and Alu/Cu material respectively the following results have been obtained:

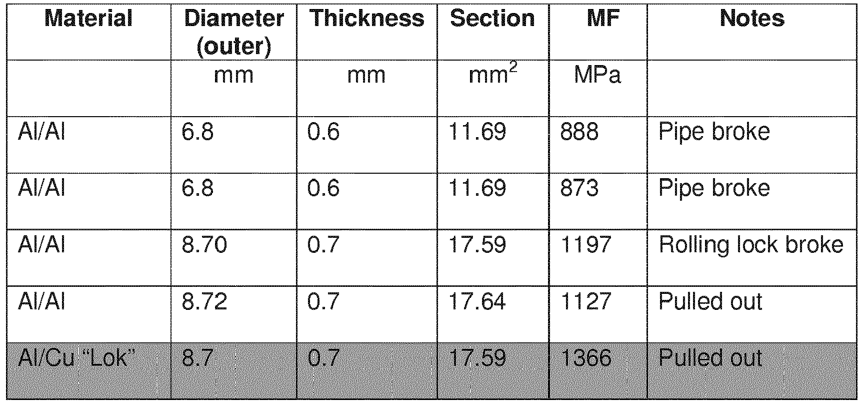

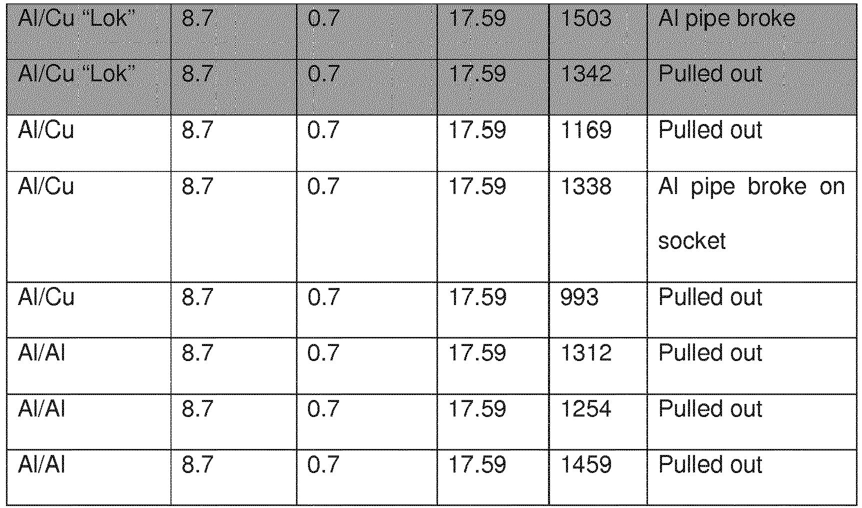

As shown in the preceding table, although the description refers to pipes with different diameters and untreated ends, the method according to the invention can also be used for pipes with an identical diameter and thickness, the only difference being to provide a socket in one of the two ends of the pipes to enable a contact-coaxial coupling.

The above-mentioned table also includes the data relating to connections of a known type using Lokrings (identified in the table as "Lok"). Clearly, the final tensile strength results for a connection according to the invention are substantially comparable with those of a Lokring connection, but the cost of production is significantly lower.

The applicant has also conducted tests by vibration-stressing the connections in an ultrasonic bath. Excellent results have been obtained in this case too, in any event comparable with the results obtained by means of more expensive and complex known technologies. Clearly, this type of connection according to the invention can be used not only for butt connections between pipes, but also to connect a pipe with connectors of different types (T-, Y-connectors, etc.) as well as valves or similar accessories of a refrigerating circuit.

## Claims

1. Method for connecting pipes (12,14), particularly for connecting pipes used in a refrigerating circuit of a refrigerator or suchlike, **characterised in that** it comprises the phases of inserting the end of a first pipe (12) into the end of a second pipe (14) so that the outer surface of the first pipe (12) is substantially in contact with the inner surface of the second pipe (14), and plastically deforming at least a part of the connection area (10) so as to create at least one annular groove (16) round the second pipe (14), said plastic deformation locally affecting both pipes (12, 14).

2. Method according to claim 1, in which a sealant material is applied between the above-mentioned pipes (12, 14).

3. Method according to claim 2, in which the sealant material is an epoxy resin or an anaerobic polymerisation adhesive.

4. Method according to any of the preceding claims, in which the connection area (10) is plastically deformed at the two annular grooves (16).

5. Method according to any of the preceding claims, in which the pipes (12, 14) have an outer diameter between 2 and 10mm and each annular groove (16) has a radius of curvature (R) between 0.5 and 2mm, preferably between 0.8 and 1.2mm.

6. System for connecting pipes (12, 14), particularly for connecting pipes used in a refrigerating circuit of a refrigerator or suchlike, **characterised in that** it comprises a tool (18, 26) capable of plastically deforming a connection area (10) of said pipes (12, 14), in which one end of a first pipe (12) is inserted into one end of a second pipe (14), so as to create at least one annular groove (16) round the second pipe (14), said plastic deformation locally affecting both pipes (12, 14).

7. System according to claim 6, in which said tool comprises a manual device (18) like pliers comprising at least four rotating pressing rollers (24) opposed two by two and capable of rotating round said connection area as a result of pressure stress and manual rotation.

8. System according to claim 7, in which each roller (24) has two annular projections (24a).

9. System according to claim 6, in which said tool comprises an automatic device capable of rotating at least two shaped rotating pressure wheels (26) around said connection area (10).
